# EUROPEAN PATENT SPECIFICATION

(11) **EP 0 568 101 B1**
(45) Date of publication and mention of the grant of the patent: **19.02.1997**
(21) Application number: 93107080.9
(22) Date of filing: 30.04.1993
(51) Int. Cl.: B62K 17/00, B64C 21/04

(54) **Aerodynamic body**
Aerodynamischer Körper
Corps aérodynamique

(30) Priority: 01.05.1992 JP 139760/92; 09.06.1992 JP 149540/92; 11.07.1992 JP 207524/92
(43) Date of publication of application: 03.11.1993
(73) Proprietor: YAMAHA HATSUDOKI KABUSHIKI KAISHA, Iwata-shi Shizuoka-ken, 438 (JP)
(72) Inventor: Suzuki, Ken, Iwata-shi, Shizuoka-ken 438 (JP)
(74) Representative: Grünecker, Kinkeldey, Stockmair & Schwanhäusser Anwaltssozietät

(56) References cited:
- EP-A- 0 462 511
- FR-A- 2 485 654
- GB-A- 750 305
- GB-A- 792 243
- GB-A- 2 093 152

## Description

The invention relates to an aerodynamic body providing low wind resistance when moving though the air, comprising a forwardly directed surface which penetrates the air and across which the air flows as said body moves through the air, and turbulence generating means including a plurality of openings formed in said body for discharging air in the proximity of said body surface, for generating a boundary layer of turbulent air between said body surface and the air flowing across said body surface for promoting a laminar air flow along the boundary layer of turbulent air.

The desirability of improving the wind resistance and reducing the coefficient of drag in vehicular applications are well acknowledged. In addition to improving performance, good wind resistance and low coefficients of drag can also improve fuel economy. A wide variety of streamlined configurations and aerodynamic devices have been proposed for vehicular application in order to achieve these goals.

One of the greatest causes of aerodynamic drag is the boundary condition which exists at the layer between the surface of the body moving through the air and the surrounding air. It is desirable to provide a laminar flow condition of the air across the body surface to reduce coefficient of drag and wind resistance. However, regardless of how streamlined the shape of the body is, some disruption of air flow occurs at the boundary layer and this can significantly increase the drag and flow resistance.

Although various aerodynamic devices have been proposed for improving the coefficient of drag of a body, these devices may be operative at one speed but may, due to their very nature, cause disruptions in the air flow at other speeds that can increase the drag.

Document GB-A-792 243, representing the closest prior art according to the preamble of claim 1, discloses an aerofoil which is provided with a row of holes disposed in an area where the boundary layer flow is prone to separate from the aerofoil. These holes serve as air jets for blowing air into the air stream flowing across the aerofoil surface, so as to provide a thin turbulent boundary layer flow.

This known aerodynamic body is however unsatisfactory as regards the supply of air through said air discharge openings. Particularly, said document suggests to supply air by a blower driven from the main or an auxiliary power plant and to deliver it by ducts to said openings. Particularly, when a rather small aerodynamic body such as a motorcycle or a helmet for a motorcyclist is considered, this known arrangement is too heavy, space consuming and too complicated. Particularly, it is unsuitable for helmets, as a power plant is necessary.

Further, document GB-A-2 093 152 discloses an aerofoil provided with an intake slot formed along the leading edge of the wing, so as to introduce some air into ducts inside the wing and to discharge this air aft through holes in the wing upper skin, parallel to the wing surface, thus increasing the aft velocity of the boundary air.

However, this document does not aim to generate a boundary layer of turbulent air between the body surface and the air flowing across said body surface so as to promote a laminar air flow along the boundary layer of turbulent air. This arrangement should prevent the boundary layer from separating for some operating conditions.

Accordingly, it is an objective of the present invention to provide an improved aerodynamic body as indicated above enabling to acquire a smooth laminar air flow close to a body surface of the aerodynamic body avoiding disruptions thereof as far as possible, avoiding the separation of a boundary layer of flowing air adjacent to the surface of the aerodynamic body and to reduce the drag of the aerodynamic body under all speed moving conditions.

According to the invention, this objective is solved for an aerodynamic body as indicated above in that said turbulence generating means comprises a ram air inlet opening formed in said body and facing forwardly to receive ram air flow, and a plenum chamber formed beneath said body surface for accumulating high pressure air therein and communicated with said openings for discharging said high pressure air therethrough, and that a total opening area of said openings is smaller than the opening area of said ram air inlet opening.

By means of generating a boundary layer of turbulent air which adheres to the adjacent surface of the aerodynamic body moving through the air a separation of said boundary layer from the body surface is prevented as innumerable vortexes are created along the surface of the body forming a thin layer of turbulent air along which the substantially undisturbed laminar flow of surrounding air may slide such reducing the drag, specifically under high speed conditions.

According to an advantageous embodiment of the invention, the turbulence generating means comprises at least one ram air inlet opening leading to a plenum chamber, the effective cross-sectional area of which is greater than the cross-sectional area of the ram air inlet opening.

According to yet another preferred embodiment of the present invention, the means for generating the boundary layer of turbulent air are defines by air discharge openings opening towards the body surface and guideing air from an inner area of the aerodynamic body to the outer surface thereof.

According to yet another preferred embodiment of the present invention the aerodynamic body is a cowling portion of a cowling of a motorcycle having a ram air inlet opening at the top of the front portion of the cowling with the air discharge openings being provided at a base of a windshield of the motorcycle.

According to further preferred embodiments the means for generating a boundary layer of turbulent air are not restrained to be provided at the vehicle body such as a cowling or a front fender of a motorcycle but may also be provided at for example, a helmet of the rider in order to further reduce the drag of the motorcycle and the rider, for example in motorcycle races.

Other preferred embodiments of the present invention are laid down in further dependent claims.

In the following the present invention is explained in greater detail by means of several embodiments thereof in conjunction with the accompanying drawings wherein:
Figure 1 is a side elevational view of a motorcycle having an aerodynamic device constructed in accordance with an embodiment of the invention,
Figure 2 is an enlarged side elevational view showing how the air flow patterns are generated with the aerodynamic device and also showing an aerodynamic device in accordance with an embodiment on the helmet of the rider,
Figure 3 is a front perspective view of the cowling and shows the aerodynamic device.
Figure 4 is a front elevational view of the area shown in Figure 3,
Figure 5 is an enlarged cross-sectional view taken along the line 5-5 of Figure 4,
Figure 6 is a further enlarged cross-sectional view showing the area encompassed by the circle 6 in Figure 5,
Figure 7 is an enlarged cross-sectional view taken along the line 7-7 of Figure 4,
Figure 8 is a side elevational view of a motorcycle having another form of aerodynamic device constructed in accordance with an embodiment of the invention,
Figure 9 is a top plan view of the motorcycle shown in Figure 8,
Figure 10 is a front elevational view of the motorcycle
Figure 11 is an enlarged side elevational view showing the aerodynamic device,
Figure 12 is a cross-sectional view taken along the line 12-12 of Figure 11, and
Figure 13 is a front elevational view of the area shown in Figures 11 and 12.

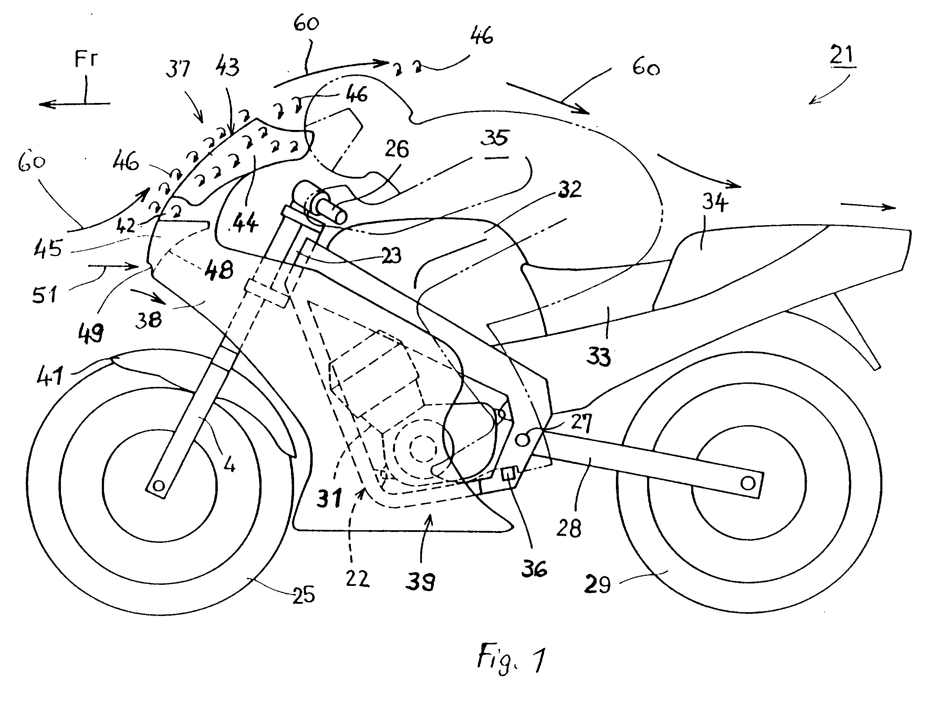

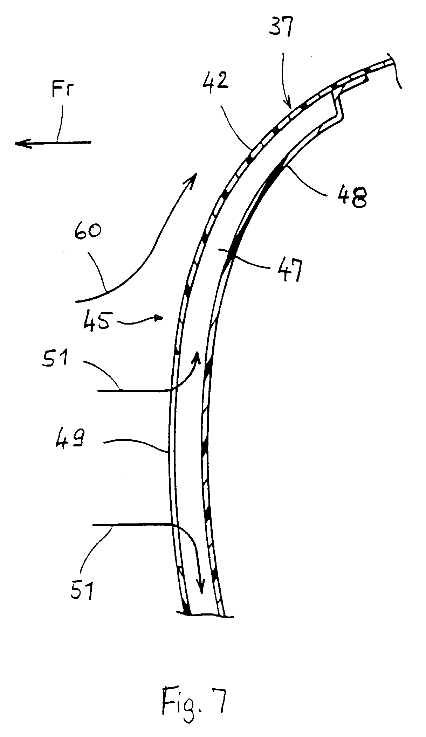

Referring first to the embodiment of Figures 1-7 and initially to Figure 1, a motorcycle embodying an aerodynamic device constructed in accordance with a first embodiment of the invention is identified generally by the reference numeral 21. The invention is described in conjunction with a motorcycle, however, it should be readily apparent to those skilled in the art that the invention can be applied to other types of vehicles or, as will become apparent, to the riders or apparel of the riders of such vehicles.

The motorcycle 21 includes a frame assembly, indicated generally by the reference numeral 22, and having a head pipe 23 that journals a front fork 24 for steering movement in a well known manner. A front wheel 25 is rotatably journaled by the front fork 24 and is steered by means of a handlebar assembly 26 that is affixed to the front fork assembly 24 above the head pipe 23.

The rear portion of the frame assembly 22 carries a pivot pin 27 which pivotally journals a forward end of a trailing arm 28. The rear end of the trailing arm 28 rotatably journals a rear wheel 29 in a suitable manner. Pivotal movement of the trailing arm 28 is controlled by a suspension assembly (not shown) which includes a spring and shock absorber.

An internal combustion engine 31 is supported in the frame assembly 22 in a suitable manner and drives the rear wheel 29 in any well known manner.

A fuel tank 32 for supplying fuel to the engine 31 is carried by the frame assembly 22 on its upper surface and rearwardly of the head pipe 23. A seat 33 is carried by the frame assembly 22 to the rear of the fuel tank 32 and a tandem passenger seat 34 is supported rearwardly of the operator's seat 33. A rider, shown in phantom at 35, is adapted to operate the motorcycle 21 and may ride in a crouched position as shown in the figures so as to improve the aerodynamics of the motorcycle. The rider 35 may place his feet on foot pegs 36 carried at the lower portion of the frame assembly 22 and adjacent the rear arm pivot pin 27.

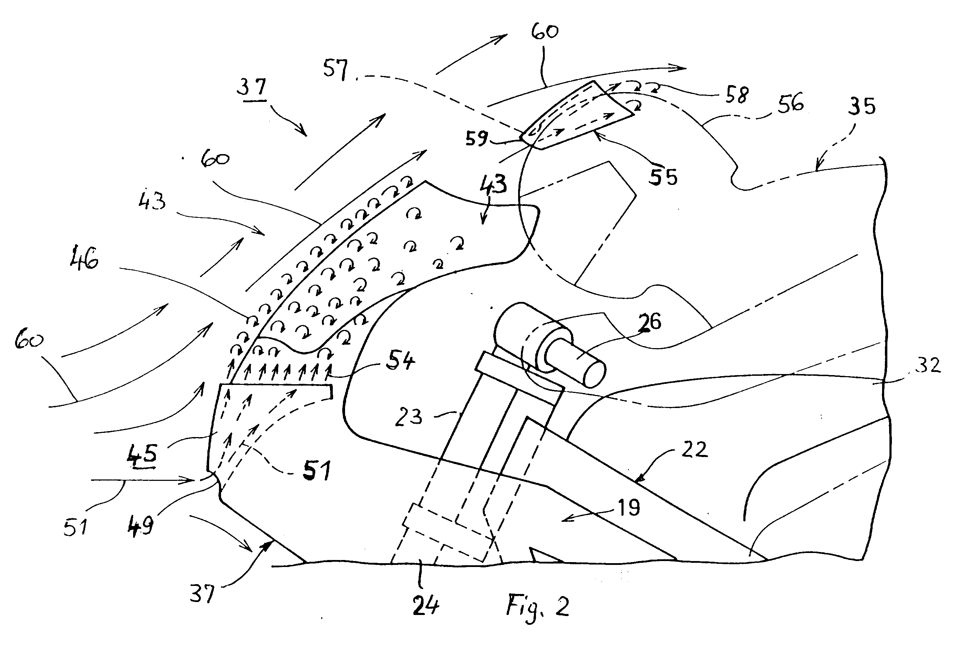

In accordance with this embodiment, the motorcycle 21 is provided with a partial body assembly, indicated generally by the reference numeral 37, and the construction of which may be best understood by additional reference to Figures 2-7. This body assembly 37 serves a combined function of offering a shield to the rider 35, protecting certain components of the motorcycle such as the engine 31 and providing a streamlining effect to reduce the wind resistance and coefficient of drag for the motorcycle 21. The body assembly 37 is comprised of a main portion, indicated generally by the reference numeral 38, which has a pair of downwardly extending side portions 39 which extend along opposite sides of the engine 31 and which enclose the forward and lower portion of the frame assembly 22. This main portion 38 also lies over a front fender 41 carried by the front fork assembly 24 above the front wheel 25.

The body assembly 37 further includes a cowling portion 42 that extends upwardly in front of the head pipe 23 and which carries a transparent windshield 43 at its upper end. It should be noted that the windshield 43 smoothly merges into the cowling portion 42 so as to avoid any disruptions in the smooth flow of air there across. The windshield 43 also has side portions 44 that curve around and merge into the corresponding sides of the cowling portion 42 so as to continue to offer a smooth configuration.

The body 37 is configured so as to provide a streamlined configuration, as aforenoted. In addition, however, an aerodynamic device, indicated generally by the reference numeral 45, is provided so as to generate a turbulent boundary layer, shown in Figure 2 and identified by the reference numeral 46, between the surface of the body 37 and particularly the cowling portion 42 and the air flowing across the front of the motorcycle.

The aerodynamic device 45 includes a plenum chamber, indicated generally by the reference numeral 47, which is formed by the inner surface of the cowling portion 42 and a cover plate 48 that is affixed thereto on its inner surface. At approximately the leading edge of the body 37 there is provided a relatively-narrow air inlet slit 49 which receives ram air from the air flow as shown by the arrow 51. The slit 49 has a relatively small cross-sectional area compared to the cross-sectional area of the plenum chamber 47. As a result, this slit 49 will offer very little flow resistance regardless of the speed at which the motorcycle is traveling, but nevertheless will collect sufficient air so as to generate turbulence, in the manner which will now be described.

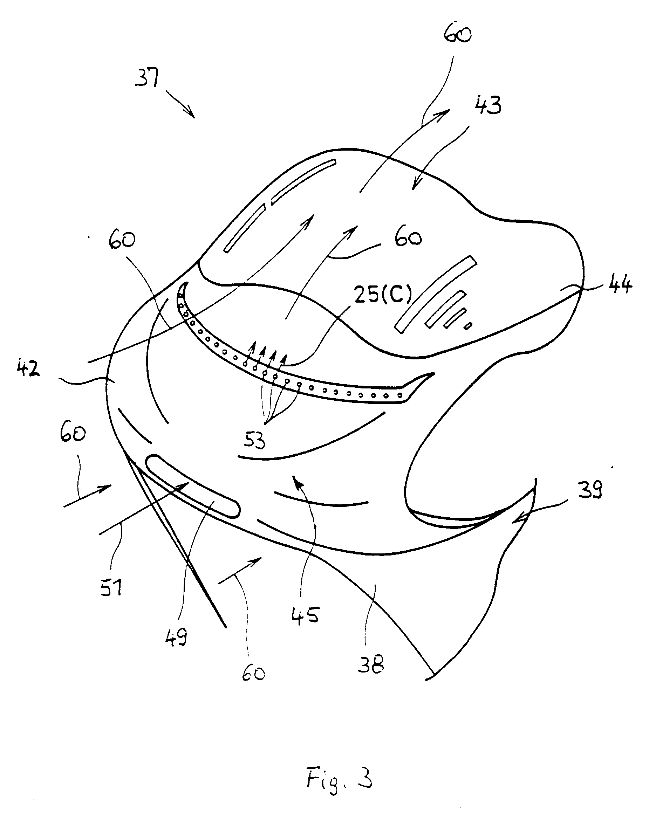

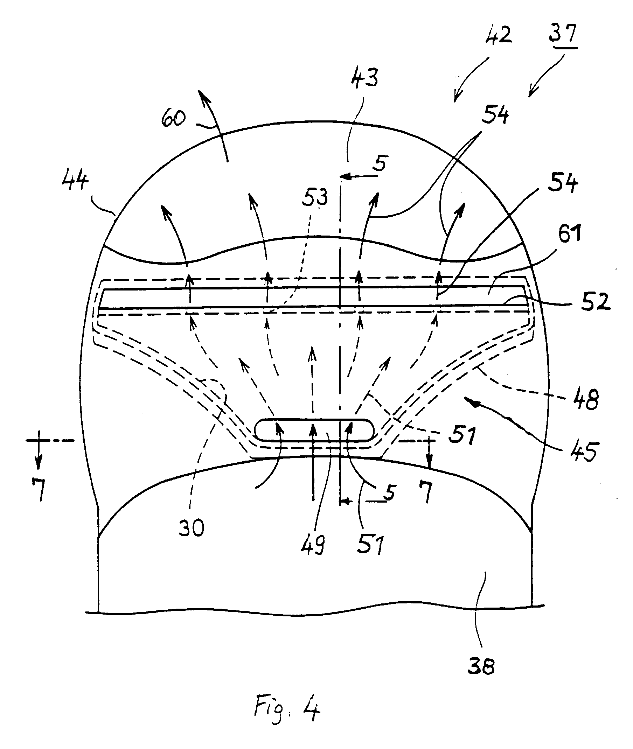

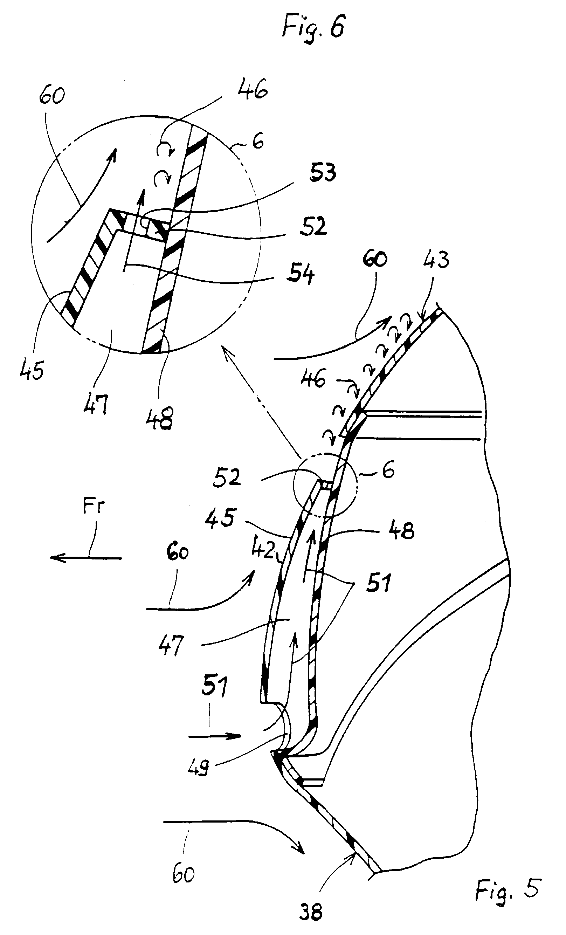

There is provided a lip 52 at the upper end of the plenum chamber 47, which lip 52 offers minimum obstructions in the flow area of the configuration of the front of the motorcycle body assembly 37 as clearly shown in Figure 5. However, the lip 52 is provided with a plurality of relatively small openings 53 from which the air in the plenum chamber 47 may be discharged as shown by the arrows 54. As the diameter of the air discharge openings 53 is small the speed of the air discharge therefrom is considerably lower and sufficiently small as compared with the surrounding substantially laminar flow of air as indicated by the arrows 60 in Figures 1 and 2. Therefore, said air flow 54 discharged from the openings 53 is transferred into innumerable vortexes and swirls as indicated by the small arrows along the windshield 43 in Figure 2, said swirl action defining the turbulent boundary layer 46 which does not separate from the windshield 43, i.e. the associated body surface. Said boundary layer 46, moreover, results also in a negative pressure upstream thereof which also adds to a smooth laminar flow of surrounding air 60 along the upstream main portion 38 of the body assembly 37 (see also Figures 3 and 4). Thus, the air flow 54 discharged from the air discharge openings 53 will cause swirls or eddy currents to form along the front of the motorcycle body assembly 37 and particularly the cowling portion 42 and windscreen 43 so as to provide a turbulent boundary layer 46 so that the remainder of the air 60 flowing across the front of the body 37 can be separated by this boundary layer 46 and flow in a laminar manner to provided an extremely effective aerodynamic device. Because of this boundary layer 46, the coefficient of drag for the motorcycle 21 will be substantially improved. As shown in Figure 4 the lip 52 is defined through a rearwardly folded step provided within a continuous transverse opening 61 from which the discharged air flow 54 escapes. This leads to the boundary layer 46 of turbulent air to be established more homegeneously downstream of the air discharge openings 53.

As shown in greater detail in Figures 5 and 6 the air inlet opening or slit 49 which is defined through a transverse slit through the body assembly (or front cowling) 37 is disposed forwardly and downwardly of the air discharge openings 53 which extend through the lip 52 of uniform height, with the plenum chamber 47 forming an air guide channel for the ram air 51 introduced through the slit 49. The flow resistance formed by the slit 49, the plenum chamber 47 and the discharge openings 53 are adjusted such that the cross-sectional area of the slit 49 is smaller than the cross-sectional area of the plenum chamber 47 while, in turn, the total cross-sectional area of the discharge openings 53 is smaller than that of the slit 49 to avoid air resistance to increase under low and medium speed conditions of travelling. As shown in Figures 5 and 6 the cover plate 48 made of resin for defining the plenum chamber 47 from behind, is formed like an inverted or upside-down trapizoid as seen from front (see Figure 4) and at its upper margin connects to the windshield 43. As shown in Figure 5 the plenum chamber 47 forming the air guide passage from the lower air inlet slit 49 into the upper discharge openings 53 is gradually increasing in thickness along the guide passage of the air flow. Moreover, a horizontal cross-sectional area of the plenum chamber 47 at its vertical mid-section is larger than the opening area of the air inlet opening 49 (see Figure 4). Preferably the diameter of each air discharge opening 53 is in the amount of 0.8 to 1.2 mm in diameter.

In addition to the aerodynamic device 45, a similar aerodynamic device 55 may be mounted on a helmet 56 of the rider 35. Like the aerodynamic device 45, the aerodynamic device 55 has a generally narrow inlet opening slit 59 and defines an internal plenum chamber 57 to receive ram air. A plurality of perforated openings at the opposite end of the plenum chamber 57 generate eddy current turbulent air 58 that forms a boundary layer between the outer periphery of the helmet 56 and the flowing air 60.

It should be readily apparent from the description of the embodiment of Figures 1-7 that the aerodynamic devices 45 and 55 are extremely effective in improving the coefficient of drag of not only the body of a vehicle but also the helmet worn by the rider 35. In the foregoing embodiment, the body aerodynamic device 45 has been placed upon the main body portion at the base of the windshield 43.

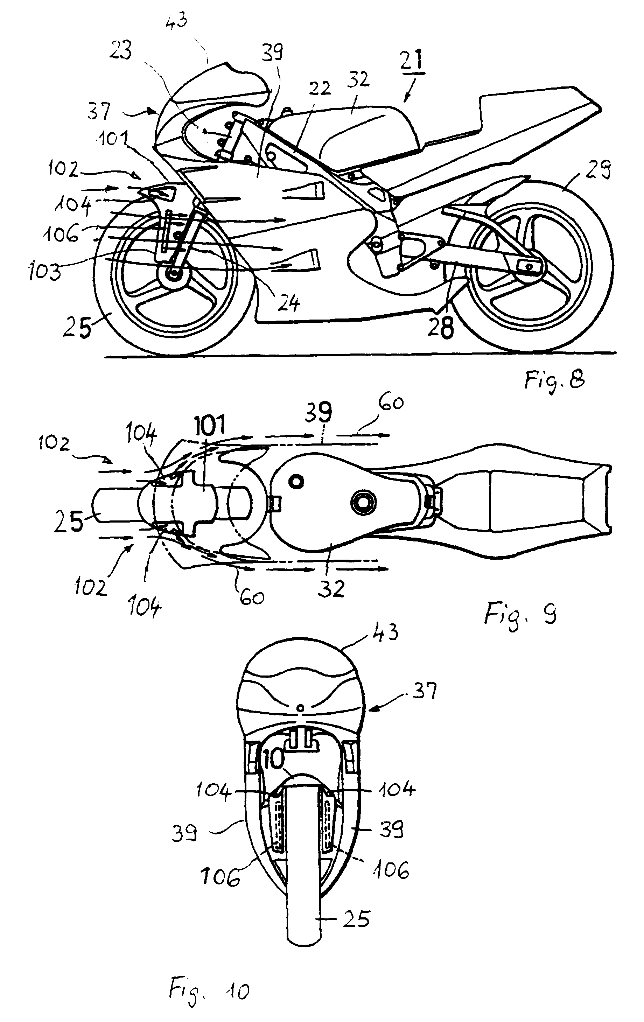

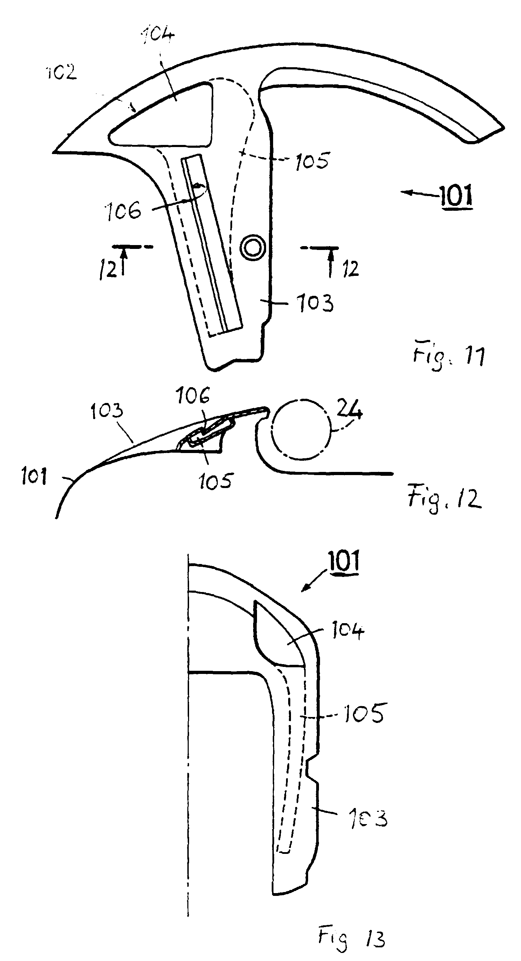

Of course, this same type of device may be employed on other portions of the body and Figures 8-13 show an embodiment wherein an aerodynamic device is positioned on the front fender and cooperates with the front fork. Since the basic construction of the motorcycle of this embodiment is the same as that previously described, components which are the same as the previously described embodiment have been identified by the same reference numerals and will be described again only insofar as is necessary to understand the construction and operation of this embodiment.

In this embodiment, a front fender assembly 101 is positioned over the front wheel 25 and cooperates with the front fork 24 to provide streamlining for this front fork 24. The front fender 101 includes a pair of aerodynamic devices, indicated by the reference numeral 102, each of which is positioned on a respective side of the front fender 101. The front fender 101 has a pair of skirt portions 103, each of which lie on a respective side of the front wheel 25 forwardly of the corresponding sides of the front fork 24. The aerodynamic devices 102 include air inlet openings 104 which are faired into the shape of the fender 101 and have a relatively small cross-sectional area so as to offer very little flow resistance but nevertheless so as to permit ram air to enter therethrough.

This ram air then flows into a plenum chamber 105 positioned on each of the skirt portions 103 and which has an effective cross-sectional area substantially greater than that of the inlet openings 104 and also a fairly substantial volume. A pair of vertically extending rearwardly facing surfaces 106 extend forwardly of the side portions of the fork 24 and each being formed with a plurality of small perforated openings for discharing turbulent air in a rearward direction so as to cause a turbulent air boundary layer between the side portions 103 and fork 24 and the air flowing across. This effect can also be extended to side portions of the cowling due to the turbulent boundary layer.Therefore, this turbulent air provides the boundary layer and promotes a laminar air flow above the surface and the advantages of the previously described embodiment.

It should be readily apparent from the foregoing description that the described embodiments of the invention provide extremely effective aerodynamic devices which create a turbulent boundary layer between the body on which the effect is to be generated and the laminar air flowing across the body so as to reduce air resistance and improve drag coefficient. Several body locations have been illustrated and it should be readily apparent to those skilled in the art that this concept can be used at various places on the body of a vehicle and/or on articles worn by riders of the vehicle over their exposed areas.

Aside from the reduced wind resistance obtained through the invention the above-indicated embodiment of Figures 1 to 7 disposing the air discharge openings of the base of a windshield is also highly effective in precluding the windshield from colliding with insects improving riding comfort, specifically under high speed conditions, such as on highways like autobahns.

## Claims

1. Aerodynamic body providing low wind resistance when moving though the air, comprising a forwardly directed surface which penetrates the air and across which the air flows as said body moves through the air, and turbulence generating means (45, 55, 102) including a plurality of openings (53) formed in said body for discharging air in the proximity of said body surface, for generating a boundary layer (46, 58) of turbulent air between said body surface and the air flowing across said body surface for promoting a laminar air flow along the boundary layer (46, 58) of turbulent air,
**characterized in that**
said turbulence generating means comprises a ram air inlet opening (49, 104) formed in said body and facing forwardly to receive ram air flow, and a plenum chamber (47) formed beneath said body surface for accumulating high pressure air therein and communicated with said openings (53) for discharging said high pressure air therethrough, and that a total opening area of said openings (53) is smaller than the opening area of said ram air inlet opening (49, 104).

2. Aerodynamic body as claimed in claim 1, **characterized in that** said turbulence generating means comprises at least one ram air inlet opening (49, 59, 104) leading to said plenum chamber (47, 57, 105), the effective cross-sectional area of which is greater than the cross-sectional area of the ram air inlet opening (49, 59, 104).

3. Aerodynamic body as claimed in claim 1 or 2, **characterized in that** the plenum chamber (47, 57, 105) defines an air guide channel between the ram air inlet opening (49, 56, 104) and the discharging openings (53).

4. Aerodynamic body as claimed in at least one of the preceding claims 1 to 3, **characterized in that** said turbulence generating means is integral with the aerodynamic body.

5. Aerodynamic body as claimed in at least one of the preceding claims 1 to 4, **characterized by** a cowling portion (42) comprising the ram air inlet opening (49) at the top of a front portion thereof with the discharge openings (53) being provided at a base of a windshield (43).

6. Aerodynamic body as claimed in claim 5, **characterized in that** the ram air inlet opening defines a transverse slit (49) opening towards a plenum chamber (47) which is in the shape of an upside-down trapezoid as defined through a cover plate (48) that is affixed to an inner surface of the cowling portion (42), whereby the larger cross-section of said trapezoid is adjacent to said air inlet opening.

7. Aerodynamic body as claimed in claim 5 or 6, **characterized in that** said turbulence generating means as defined by the cover plate (48) and the cowling portion (42) comprises an upper lip (52) of small uniform height penetrated by the air discharging openings (53) directed in downstream direction of said ram air flow (51).

8. Aerodynamic body as claimed in at least one of the preceding claims 1 to 7, **characterized in that** said ram air inlet opening (49) is disposed forwardly and downwardly of the air discharge openings (53).

9. Aerodynamic body as claimed in at least one of the preceding claims 1 to 8, characterized in that the air discharging openings (53) open into a continuous discharge opening recessed in the body surface.

10. Aerodynamic body as claimed in at least one of the preceding claims 1 to 4, **characterized by** a drivers helmet (56) comprising the turbulence generating means formed by a plate affixed to the helmet (56) or being integral therewith and defining an inlet opening slit (59) and a plenum chamber (57) opening towards at least one downstream discharge opening.

11. Aerodynamic body as claimed in at least one of the preceding claims 1 to 4, **characterized by** a front fender assembly (101) comprising at least one ram air inlet opening (104).

12. Aerodynamic body as claimed in claim 11, **characterized in that** said front fender assembly (101) comprises a pair of turbulence generating means each comprising a ram air inlet opening (104) at opposite upper side portions of the front fender assembly (101).

13. Aerodynamic body as claimed in claims 11 or 12, characterized in that said front fender assembly (101) comprises right and left skirt portions (103) disposed forwardly of the corresponding sides of a front fork (24), said skirt portions (103) each comprise plenum chambers (105) extending substantially downwardly through the corresponding skirt portion (103) to lead to a respective rearwardly facing surface (106) penetrated through a plurality of air discharge openings.

14. Aerodynamic body as claimed in claim 13, **characterized in that** said rearwardly facing surfaces (106) extend forwardly of the corresponding side portions of the front fork (24) and said air discharge openings are oriented to discharge outerward side surfaces of a cowling.

## Patentansprüche

1. Aerodynamischer Körper zur Bereitstellung eines geringen Windwiderstandes, wenn er sich durch die Luft bewegt, mit einer nach vorne gerichteten Oberfläche, welche die Luft durchdringt und über welche die Luft strömt, wenn dieser Körper sich durch die Luft bewegt, sowie Turbulenz erzeugende Mittel (45,55,102), welche eine Vielzahl von Öffnungen (53) enthalten, die in diesen Körper zur Abgabe von Luft in der Nähe dieser Oberfläche des Körpers zur Erzeugung einer Grenzschicht (46,58) turbulenter Luft zwischen der Körperoberfläche und der über diese Körperoberfläche strömenden Luft zur Unterstützung einer laminaren Luftströmung entlang der Grenzschicht (46,58) der turbulenten Luft ausgebildet sind, da**durch gekennzeichnet**, daß die eine Turbulenz erzeugenden Mittel eine StaudruckLufteinlaßöffnung (49,104) enthalten, die in diesem Körper ausgebildet ist und nach vorne weist, um die Staudruckluftströmung aufzunehmen, und daß eine Luftkammer (47) unterhalb dieser Oberfläche des Körpers ausgebildet ist zum Akkumulieren von Hochdruckluft darin sowie mit diesen Öffnungen (53) in Verbindung steht, um dadurch die Hochdruckluft auszugeben, und daß ein gesamter Öffnungsbereich dieser Öffnungen (53) geringer ist als der Öffnungsbereich dieser Staudruck-Lufteinlaßöffnung (49,104).

2. Aerodynamischer Körper nach Anspruch 1, **dadurch gekennzeichnet**, daß die eine Turbulenz erzeugende Einrichtungen zumindest eine Staudruck-Lufteinlaßöffnung (49,59,104) enthält, die zu dieser Luftkammer (47,57,105) führt, wobei deren effektiver Querschnittsbereich größer als der Querschnittsbereich der Staudruck-Lufteinlaßöffnung (49,59,104) ist.

3. Aerodynamischer Körper nach Anspruch 1 oder 2, **dadurch gekennzeichnet**, daß die Luftkammer (47,57,105) zwischen der Staudruck-Lufteinlaßöffnung (49,56,104) und den Öffnungen (53) zum Ablassen einen Luftführungskanal bildet.

4. Aerdynamischer Körper nach mindestens einem der vorstehenden Ansprüche 1 bis 3, **dadurch gekennzeichnet**, daß die eine Turbulenz erzeugenden Mittel einstückig mit dem aerodynamischen Körper ausgebildet sind.

5. Aerodynamischer Körper nach mindestens einem der vorstehenden Ansprüche 1 bis 4, **gekennzeichnet durch** einen Verkleidungsabschnitt (42), der an dem oberen Abschnitt eines vorderen Bereichs eine Staudruck-Lufteinlaßöffnung (49) aufweist, wobei die Öffnungen (53) zum Ablassen bei einer Basis einer Windschutzscheibe (43) angeordnet sind.

6. Aerodynamischer Körper nach Anspruch 5, **dadurch gekennzeichnet**, daß die Staudruck-Lufteinlaßöffnung einen transversalen Schlitz (49) definiert, der in Richtung der Luftkammer (47) sich öffnet, welche die Form eines auf dem Kopf stehenden Trapezoids aufweist und von einer Abdeckplatte (48) begrenzt ist, welche an einer inneren Oberfläche des Verkleidungsabschnittes (42) angebracht ist, wobei sich der größere Querschnitt dieses Trapezoides in der Nähe dieser Lufteinlaßöffnung befindet.

7. Aerodynamischer Körper nach Anspruch 5 oder 6, **dadurch gekennzeichnet**, daß die eine Turbulenz erzeugenden Mittel, die von der Abdeckplatte (48) und dem Verkleidungsabschnitt (42) definiert werden, eine obere Lippe (52) mit einer geringeren einheitlichen Höhe aufweisen, die von den Öffnungen (53) zum Ablassen durchzogen sind, welche in stromabwärtiger Richtung dieses Staudruck-Luftflusses (51) ausgerichtet sind.

8. Aerodynamischer Körper nach mindestens einem der vorstehenden Ansprüche 1 bis 7, **dadurch gekennzeichnet**, daß die Staudruck-Lufteinlaßöffnung (49) vorwärts und unterhalb dieser Öffnungen (53) zur Luftabgabe angeordnet ist.

9. Aerodynamischer Körper nach mindestens einem der vorstehenden Ansprüche 1 bis 8, **dadurch gekennzeichnet**, daß die Öffnungen (53) zur Luftabgabe sich in eine kontinuierliche Ablaßöffnung öffnen, die in der Oberfläche des Körpers ausgespart ist.

10. Aerodynamischer Körper nach mindestens einem der vorstehenden Ansprüche 1 bis 4, **gekennzeichnet durch** einen Helm (56) für einen Fahrer, mit Turbulenz erzeugenden Einrichtungen, die durch eine an dem Helm (56) angebrachte Platte bestehen oder einstückig mit diesem ausgebildet sind und einen Einlaßöffnungsschlitz (59) sowie eine Luftkammer (57) bilden, welche sich in Richtung von zumindest einer stromabwärtigen Ablaßöffnung hin sich öffnet.

11. Aerodynamischer Körper nach mindestens einem der vorstehenden Ansprüche 1 bis 4, **gekennzeichnet durch** eine vordere Schutzblechanordnung (101), welche zumindest eine Staudruck-Lufteinlaßöffnung (104) aufweist.

12. Aerodynamischer Körper nach Anspruch 11, **dadurch gekennzeichnet**, daß die vordere Schutzblechanordnung (101) ein Paar von einer Turbulenz erzeugenden Einrichtungen aufweist, wobei jede an einander entgegengesetzten oberen Seitenabschnitten der vorderen Schutzblechanordnung (101) eine Staudruck-Lufteinlaßöffnung (104) aufweist.

13. Aerodynamischer Körper nach Anspruch 11 oder 12, **dadurch gekennzeichnet**, daß die vordere Schutzblechanordnung (101) rechte und linke Schürzenabschnitte (103) aufweist, welche vorwärts der entsprechenden Seiten einer Vordergabel (24) angeordnet sind, wobei diese Schürzenabschnitte (103) jeweils Luftkammern (105) aufweisen, welche sich im wesentlichen nach unten durch die entsprechenden Schürzenabschnitte (103) erstrecken, um zu einer entsprechenden, nach hinten weisenden Oberfläche (106) zu führen, die mit einer Vielzahl von Öffnungen zum Luftablassen durchzogen ist.

14. Aerodynamischer Körper nach Anspruch 13, **dadurch gekennzeichnet**, daß diese nach hinten weisenden Oberflächen (106) vorwärts der entsprechenden Seitenabschnitte der Vordergabel (24) erstrecken, und daß diese Öffnungen zur Luftabgabe so ausgerichtet sind, um über äußere Seitenoberflächen einer Abdeckung abzulassen.

## Revendications

1. Corps aérodynamique fournissant une faible résistance au vent lorsqu'il se déplace dans l'air, comprenant une surface orientée vers l'avant, qui pénètre dans l'air et sur laquelle l'air s'écoule lorsque ledit corps se déplace dans l'air, et des moyens générateurs de turbulences (45, 52, 102) comprenant une pluralité d'ouvertures (53) formée dans ledit corps, servant à évacuer l'air à proximité de ladite surface de corps, afin de produire une couche limite (46, 58), constituée d'air turbulent, entre ladite surface de corps et l'air s'écoulant sur ladite surface de corps, en vue de favoriser un écoulement d'air laminaire le long de la couche limite (46, 58) d'air turbulent,
caractérisé en ce que
ledit moyen générateur de turbulences comprend une ouverture d'entrée d'air sous pression dynamique (49, 104), formée dans ledit corps et tournée vers l'avant afin de recevoir un écoulement d'air sous pression dynamique, et un réservoir d'air (47) formé au-dessous de ladite surface de corps, afin d'y accumuler de l'air sous haute pression, et ce réservoir étant mis en communication avec lesdites ouvertures (53) servant à évacuer ledit air sous pression s'y trouvant, et en ce que l'aire d'ouverture totale desdites ouvertures (53) est inférieure à l'aire d'ouverture de ladite ouverture d'entrée d'air sous pression dynamique (49, 104).

2. Corps aérodynamique selon la revendication 1, caractérisé en ce que ledit moyen générateur de turbulences comprend au moins une ouverture d'entrée -d'air sous pression dynamique (49, 59, 104) débouchant dans ledit réservoir d'air (47, 57, 105), dont l'aire efficace de section transversale est supérieure à l'aire efficace de section transversale de l'ouverture d'entrée d'air sous pression dynamique (49, 59, 104).

3. Corps aérodynamique selon la revendication 1 ou 2, caractérisé en ce que le réservoir d'air (47, 57, 105) définit un canal de guidage d'air entre l'ouverture d'entrée d'air sous pression dynamique (49, 56, 104) et les ouvertures d'évacuation (53).

4. Corps aérodynamique selon au moins l'une des revendications 1 à 3 précédentes, caractérisé en ce que ledit moyen générateur de turbulences est réalisé d'un seul tenant avec le corps aérodynamique.

5. Corps aérodynamique selon au moins l'une des revendications 1 à 4 précédentes, caractérisé par une partie de capot (42) comprenant l'ouverture d'entrée d'air sous pression dynamique (49), au sommet de sa partie avant, les ouvertures d'évacuation (53) étant ménagées au niveau d'une base d'un pare-brise (43).

6. Corps aérodynamique selon la revendication 5, caractérisé en ce que l'ouverture d'entrée d'air sous pression dynamique définit une fente transversale (49) débouchant vers un réservoir d'air (47), qui se présente sous la forme d'un trapèze renversé, formé dans une plaque de revêtement (48) qui est fixée à une surface intérieure d'une partie de capot (42), de manière que la plus grande section transversale dudit trapèze soit adjacente à ladite ouverture d'entrée d'air.

7. Corps aérodynamique selon la revendication 5 ou 6, caractérisé en ce que ledit moyen générateur de turbulences défini par la plaque de revêtement (48) et la partie de capot (42) comprend un bec supérieur (52) d'une faible hauteur uniforme, pénétré par les ouvertures d'évacuation d'air (53) orientées dans la direction aval dudit écoulement d'air sous pression dynamique (51).

8. Corps aérodynamique selon au moins l'une des revendications 1 à 7 précédentes, caractérisé en ce que ladite ouverture d'entrée d'air sous pression dynamique (49) est disposée vers l'avant et vers le bas des ouvertures d'évacuation d'air (53).

9. Corps aérodynamique selon au moins l'une des revendications 1 à 8 précédentes, caractérisé en ce que les ouvertures d'évacuation d'air (53) débouchent dans une ouverture d'évacuation continue, ménagée dans la surface du corps.

10. Corps aérodynamique selon au moins l'une des revendications 1 à 4 précédentes, caractérisé par un casque de conducteur (56), comprenant le moyen générateur de turbulences formé par une plaque fixée au casque (56) ou réalisé d'un seul tenant avec ce dernier, et formant une fente d'ouverture d'entrée (59), et un réservoir d'air (57) débouchant vers au moins une ouverture d'évacuation aval.

11. Corps aérodynamique selon au moins l'une des revendications 1 à 4 précédentes, caractérisé par un agencement de garde-boue (101) avant, comprenant au moins une ouverture d'entrée d'air sous pression dynamique (104).

12. Corps aérodynamique selon la revendication 11, caractérisé en ce que ledit agencement de garde-boue (101) avant comprend un couple de moyens générateurs de turbulences comportant chacun une ouverture d'entrée d'air sous pression dynamique (104), sur des parties latérales supérieures opposées de l'agencement de garde-boue avant (101).

13. Corps aérodynamique selon les revendications 11 ou 12, caractérisé en ce que ledit agencement de garde-boue avant (101) comprend des parties de jupe droite et gauche (103) disposées vers l'avant des côtés correspondants d'une fourche avant (24), lesdites parties de fourche (103) comprenant chacune des réservoirs d'air (105) s'étendant sensiblement vers le bas dans la partie de jupe (103) correspondante, pour mener à une surface (106) respective, tournée vers l'arrière, percée par une pluralité d'ouvertures d'évacuation d'air.

14. Corps aérodynamique selon la revendication 13, caractérisé en ce que lesdites surfaces (106) tournées vers l'arrière s'étendent vers l'avant des parties latérales correspondantes de la fourche avant (24) et lesdites ouvertures d'évacuation d'air sont orientées afin d'évacuer vers l'extérieur les surfaces latérales d'un capot.
